# EUROPEAN PATENT SPECIFICATION

(11) **EP 1 564 965 B1**
(45) Date of publication and mention of the grant of the patent: **07.11.2007**
(21) Application number: 05250776.1
(22) Date of filing: 10.02.2005
(51) Int. Cl.: H04L 29/06, H04M 1/725, G06F 17/30

(54) **Digital content preview user interface for mobile devices**
Benutzerschnittstelle zur Vorschau von digitalem Inhalt auf mobilen Geräten
Interface utilisateur de prévisualisation de contenu numérique pour terminaux mobiles

(30) Priority: 11.02.2004 US 544107 P
(43) Date of publication of application: 17.08.2005
(73) Proprietor: SUN MICROSYSTEMS, INC., Santa Clara, California 95054 (US)
(72) Inventor: Wagner, Annette M., Los Altos California 94022 (US); Coward, Daniel R., San Francisco California 94131 (US)
(74) Representative: Collins, John David

(56) References cited:
- US-A1- 2002 147 788
- US-A1- 2003 065 802
- US-B1- 6 418 473
- US-B1- 6 493 758

## Description

### BACKGROUND

### 1. Field of the Invention

This invention relates generally to mobile devices, and more particularly to methods for providing smooth and delay-reduced navigation through digital content offered for purchase over a wireless connection.

### 2. Description of the Related Art

Portable consumer devices used for communication, business and entertainment have continued to increase in popularity over the years due to their increased functionally and affordability. Wireless phones, for example, have grown to such popularity over the last several years so that having a wireless phone has become an expected necessity. With this increase in popularity and increases in technology, wireless phones continue to add features to enable users to access data, navigate through menus, and customize the phone's appearance and sounds. For instance, the sound that a wireless phone makes when an incoming call arrives is referred to a ringtone (*e.g*., not unlike the definition of a standard home phone).

Most wireless phones come with a set number of ringtones, but users are also capable of accessing other special ringtones from a wireless carrier. As used herein, the term "wireless carrier" refers to the company that provides the telephone service and also provides access to content. To access the content, the wireless carrier requires the user to use the wireless phone's specialized browser to connect to its homepage, for example. Once connected, the user is required to navigate through a complex sequence of many screens by using the typical arrow keys of a current day wireless phone and select particular menu items. The process of navigating through the many screens and selecting different options is a time consuming process, which requires the user's undivided attention. A major disadvantage with this common practice of shifting through many screens and selecting options is that each selection in the navigation requires the time consuming interactive connection and downloads of data from a provisioning server of the wireless carrier.

As a result, each click requires a wait on the part of the user (*i.e*., also referred to "click-and-wait" delays). Although this may seem to be a minor price to pay for wirelessly navigating through selection screens, the navigation can be very time consuming. In the case of selecting ringtones for purchase from the wireless carrier's server, the navigation many times will take the user several minutes to repetitively perform the operations of manually clicking and selecting options.

Once the user finally reaches the desired ringtone, the ringtone will only be displayed by name, and the user will have to proceed through another maze of screens to complete the purchase of the desired ringtone. Further, users are less likely to purchase content without being able perform a preview. For example in the case of a ringtone, the preview activity is the ability for the device to be able to play a shortened version of the ringtone.
US 2003/0065802 describes a system for dynamically creating a sample of multimedia content for preview by a user of a mobile terminal. The method involves providing a first set of parameters associated with a size of the preview sample and providing a second set of parameters associated with composition of the preview sample. A preview sample is dynamically extracted from the multimedia content using the respective first and second parameter sets.
US2002/0417788 describes a system for dynamic preloading of webpages. A page server transmits pages upon request and a page client requests and presents those pages to an operator. The page client dynamically identifies links subsequent to the loaded page and preloads pages identified by those links.
US6,418,473 describes a system for previewing multimedia content. A client displays plural preview screens representing available multimedia channels. Selection of a particular one of a plural preview screens results in display of a particular multimedia source.

As mentioned above, a problem with current technology is that each manual selection step will necessarily required the user to actively search, select, and wait. Once the data is pulled in response to the selection, the user can repeat the process again and again. In many cases, the need for repetitively clicking on screens and selecting options is that users rarely access the wireless carrier in this way to obtain a particular ringtone. Users interested in obtaining a ringtone, may go on to browse and window-shop till the see a ringtone that may appeal to them. This natural window-shopping process necessarily adds the need for the user to continually select and wait, select and wait, ... In one current technology example, wireless phone browsers typically use the well known wireless application protocol (WAP) to enable browser interactivity with desired content. Thus, when users perform the active searches and selections, the user is essentially waiting for the server to return the selected content as well as the navigation rendering code.

In the example of ringtones, users will generally avoid spending time to obtain ringtones that are relatively inexpensive if the cost comes at such an extended amount of navigation, search, and wait times commonly experienced by users seeking to obtain such a feature. Although examples have concentrated on ringtones, the problems described herein are equally applicable to the selection and acquiring of other digital content.

### SUMMARY

Broadly speaking, the disclosed embodiments provide methods and system for accessing, navigating and handling efficient interaction with digital media content from a portable device. The methods provide techniques for interaction that facilitate user interactivity and enable easy access to particular digital media content, while reducing delays associated with prior art click and wait methods.

According to an aspect of the present invention, there is provided, a computer implemented method for handling access to digital media content over a wireless connection, comprising: enabling selection, through a wireless device, of a type of digital media content over the wireless connection; rendering storefront navigation and presentation data for a type of digital media content selected, the storefront navigation and presentation data being rendered from local memory of the wireless device, such that the storefront navigation and presentation data is not downloaded over the wireless connection; and downloading a listing of digital media content to display on a screen of the wireless device upon navigating to the storefront, and downloading each of the digital media content of the listing without requiring specific selection of the digital media content of the listing, and the storefront navigation and presentation data includes data for interfacing with each of the digital media content that is downloaded.

According to an aspect of the present invention, there is provided, a portable electronic device, the portable electronic device being configured to handle access to digital media content over a wireless connection, comprising: memory for storing navigation and presentation data, the navigation and presentation data enabling interfacing with digital media content obtained over the wireless connection; means for enabling selection of a type of digital media content over the wireless connection; means for rendering storefront navigation and presentation data for a type of digital media content selected, the storefront navigation and presentation data being rendered from the memory; a screen for displaying graphics associated with the storefront; means for downloading a listing of digital media content to display on a screen of the wireless device upon navigating to the storefront, and downloading each of the digital media content of the listing without requiring specific selection of the digital media content of the listing.

The present invention also provides a computer implemented method for handling access to digital media content over a wireless connection, comprising: downloading a listing of digital media content to display on a wireless device, and downloading each of the digital media content of the listing without requiring specific selection of the digital media content of the listing; wherein the wireless device enables selection of a type of digital media content over the wireless connection and renders storefront navigation and presentation data for a selected type of digital media content, the storefront navigation and presentation data being rendered from local memory of the wireless device, the storefront navigation and presentation data including data for interfacing with each of the digital media content that is downloaded.

Other aspects and advantages of the invention will become apparent from the following detailed description, taken in conjunction with the accompanying drawings, illustrating by way of example the principles of the invention.

### BRIEF DESCRIPTION OF THE DRAWINGS

Figure 1 illustrates a system for enabling a mobile device to communicate with a carrier over a wireless network, in accordance with one embodiment of the present invention.

Figures 2 and 3 illustrate flowchart diagrams outlining exemplary process operations used when accessing and downloading digital media content from a provider, in accordance with one embodiment of the present invention.

Figures 4A through 4C illustrate exemplary storefront displays that may be provided on the mobile device, in accordance with one embodiment of the present invention.

Figure 5 illustrates an example screenshot of the tone store, in accordance with one embodiment of the present invention.

Figure 6 illustrates an organizational layout of the different screens associated with the tone store, in accordance with one embodiment of the present invention.

Figures 7A through 7H illustrate exemplary display screens for the different views possible when navigating through the tone store, in accordance with one embodiment of the present invention.

Figure 8 illustrates another embodiment in which a game lounge screen illustrates the possibility to access, display, and background download other types of media other than ringtones, in accordance with one embodiment of the present invention.

Figure 9 illustrates categories for the game lounge of Figure 8.

Figures 10A through 10E illustrate the navigation that is possible through the game lounge which allows the user to navigate through the different screens using the navigation and presentation data stored on the mobile device, and listings of data that are downloaded for each of the games in the background for the user.

Figures 11A through 11E illustrate the process that a user took to purchase tecno bowl as shown in Figure 11A.

### DETAILED DESCRIPTION

In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to unnecessarily obscure the present invention.

Reference will now be made to the environment of the invention in section **I**, and in section **II**, example embodiments of the invention will be described.

### I. Environment Description

As embodiments of the present invention can implement the J2EE, J2ME, or Enterprise JavaBeans (EJB) application, a brief introduction to J2ME, J2EE, and EJB architectures are provided below. The Java 2, Micro Edition (J2ME) platform is a Java platform for consumer and embedded devices such as mobile phones, Personal Digital Assistants (PDAs), TV set-top boxes, in-vehicle telematics systems, and a broad range of embedded devices. Similar to the enterprise (J2EE), desktop (J2SE^{™}) and smart card (Java Card^{™}) counterparts, the J2ME platform is a set of standard Java application program interfaces (APIs) defined through the Java Community Process^{SM} program by expert groups that include leading device manufacturers, software vendors and service providers.

The J2ME platform delivers the power and benefits of Java technology tailored for consumer and embedded devices. The J2ME provides a flexible user interface, robust security model, broad range of built-in network protocols, and support for networked and disconnected applications. J2ME applications are written for a wide range of devices. As such, the J2ME applications can be downloaded dynamically and leverage each native capability of each device. The J2ME platform can be deployed on millions of devices (e.g., mobile phones, PDAs, automotive devices, etc.) supported by leading Java technology tools vendors and used by companies worldwide. Briefly stated, J2ME is the preferable platform for consumer and embedded devices.

The SDK provides software programmers with the speed, security and functionality to create cross-platform, mission critical applications. The JRE provides the execution environment needed to run Java platform-based applets and applications.

The J2ME architecture defines configurations, profiles and optional packages as elements for building complete Java runtime environments that meet the requirements for a broad range of devices and target markets. Each combination is optimized for the memory, processing power, and I/O capabilities of a related category of devices. The result is a common Java platform that fully leverages each type of device to deliver a rich user experience.

### • Configurations

Configurations are composed of a virtual machine and a minimal set of class libraries. The configurations provide the base functionality for a particular range of devices that share similar characteristics (e.g., network connectivity, memory footprint, etc.). Currently, there are two J2ME configurations: the Connected Limited Device Configuration (CLDC), and the Connected Device Configuration (CDC):

### • CLDC

CLDC is the smaller of the two configurations, and by way of example, is designed for devices with intermittent network connections, slow processors, and limited memory (e.g., mobile phones, two-way pagers, PDAs, etc.). By way of example, the devices may have either 16- or 32-bit CPUs, and a minimum of 128 KB to 512 KB of memory available for the Java platform implementation and the associated applications.

### • CDC

CDC is designed for devices having more memory, faster processors, and greater network bandwidth (e.g., TV set-top boxes, residential gateways, in-vehicle telematics systems, high-end PDAs, etc.). CDC includes a full-featured Java virtual machine, and a much larger subset of the J2SE platform than CLDC. As a result, most CDC-targeted devices have 32- bit CPUs and a minimum of 2 MB of memory available for the Java platform and associated applications.

### • Profiles

In order to provide a complete runtime environment targeted at specific device categories, configurations can be combined with a set of higher level APIs or profiles that further define the application life cycle model, the user interface, and access to device specific properties.

### • Mobile Information Device Profile

The Mobile Information Device Profile (MIDP) is designed for mobile phones and entry-level PDAs. Broadly speaking, MIDP can be used on any computing device that needs to take advantage of MIDP's functions. MIDP is a set of Java APIs which, together with CLDC, provides a complete J2ME application runtime environment targeted at mobile information devices, such as mobile phones and entry level PDAs. In this manner, MIDP offers the core application functionality required by mobile applications (e.g., the user interface, network connectivity, local data storage, and application management, etc.). Combined with CLDC, MIDP provides a substantially complete Java runtime environment that leverages the capabilities of handheld devices and minimizes both memory and power consumption.
Currently, CLDC, combined with the MIDP is the Java runtime environment for mobile information devices (MIDs) (e.g., phones, entry level PDAs, etc.). MIDP provides the core application functionality required by mobile applications (e.g., the user interface, network connectivity, local data storage, and application lifecycle management packaged as a standardized Java runtime environment and set of Java APIs, etc.).

### • Foundation Profile

CDC profiles are layered so that profiles can be added as needed to provide application functionality for different types of devices. The Foundation Profile (FP) is the lowest level profile for CDC and provides a network-capable implementation of CDC that can be used for deeply embedded implementations without a user interface. FP can also be combined with Personal Basis Profile and Personal Profile for devices that require a graphical user interface (GUI).

### • Personal Profile

The Personal Profile (PP) is the CDC profile aimed at devices requiring full GUI or Internet applet support (e.g., high-end PDAs, communicator-type devices, game consoles, etc.). PP includes the full Java Abstract Window Toolkit (AWT) libraries and offers Web fidelity capable of easily running Web-based applets designed for use in a desktop environment. PP replaces PersonalJava^{™} technology and provides PersonalJava applications a clear migration path to the J2ME platform.

### • Personal Basis Profile

The Personal Basis Profile (PBP), is a subset of PP. PBP provides an application environment for network connected devices that support a basic level of graphical presentation or require the use of specialized graphical toolkits for specific applications.Devices (e.g., TV set-top boxes, in-vehicle telematics systems, information kiosks, etc.) Both PP and PBP are layered on top of CDC and FP.

### • Optional Packages

The J2ME platform can be further extended by combining various optional packages with CLDC, CDC, and their corresponding profiles. In this manner, specific market requirements can be addressed. Furthermore, optional packages can offer standard APIs for using both existing and emerging technologies (e.g., Bluetooth, Web services, wireless messaging, multimedia, database connectivity, etc.). As optional packages are modular, device manufacturers can include the optional packages, as needed, to fully leverage the features of each device.

By way of example, J2ME^{™} Mobile Media API Reference Implementation Version 1.0 (MMAPI) extends the functionality of the J2ME platform by providing audio, video and other time-based multimedia support to resource-constrained devices. MMAPI allows Java developers to gain access native multimedia services available on a given device.

The reference implementation for MMAPI runs on the CLDC/MIDP profile running on Windows 2000. By way of example, the reference implementation for MMAPI has support for simple tone generation, tone sequencing, audio/video file playback and streaming, interactive MIDI, and audio/video capture. The J2ME MMAPI reference implementation is a source code product provided for porting to various platforms. The MMAPI specification has been developed through the Java Community Process^{SM} (i.e., JSR-135) by an expert group composed of companies representing device manufacturers, wireless operators and software vendors.

As the embodiments of the present invention can also involve using Enterprise Java Beans (EJB)^{™} in J2EE platform, below are brief descriptions to the J2EE platform and EJBs. The Java^{™} 2 Enterprise Edition (J2EE^{™}), developed by Sun Microsystems, Inc., is the development and deployment environment for enterprise software applications capable of running on a variety of desktop computers, servers, and other computing devices. J2EE provides architecture for developing, deploying, and executing applications in a distributed-object environment. In one embodiment, the J2EE platform comprises the Java 2 Software Development Kit, Standard Edition (SDK), and Java Runtime Environment (JRE).

J2EE facilitates building Web-based applications. Broadly speaking, J2EE services are performed in the middle tier between the user browser and the databases and legacy information systems. J2EE comprises a specification, reference implementation and a set of testing suites. J2EE further comprises Enterprise JavaBeans (EJB), JavaServer Pages (JSP), Java servlets, and a plurality of interfaces for linking to information resources in the platform.

The J2EE specifications define how applications should be written for the J2EE environment. Thus the specifications provide the contract between the applications and the J2EE platform. However, there exist a class of JAVA applications that require customization of the J2EE platform. These applications generally utilize application specific strategies created by a particular vendor to accomplish specific tasks that are not provided by the general JAVA platform on which the application executes. Examples of this class of JAVA applications include telecommunications applications and services that are deployed within a particular service provider's environment. This class of applications typically requires continuous availability, which means the environment in which the applications operate requires the applications to be available most of the time.

Summarily, EJB architecture promotes the creation of re-usable server-side behaviors or instructions in the Java language, connectors to enable access to existing enterprise systems, and easy-to-deploy program modules. The EJB architecture creates a collaborative architecture to provide services virtually anywhere, and for a wide range of customers and devices, including mobile devices.

The EJB architecture defines a model for the development and deployment of reusable Java server components called EJB components (i.e., EJB beans). As designed, the EJB component is a non-visible server component having methods that provide business logic in a distributed application. In one example, the EJB architecture includes the EJB client and the EJB server. The EJB client is configured to provide the user-interface logic on a client machine and to make calls to remote EJB components on a server. For instance, the EJB client is provided the information as to how to find the EJB server and how to interact with the EJB components.

In one example, the EJB client does not communicate directly with the EJB component. In one aspect, the EJB container provides the client proxy objects that implement the home and remote interfaces of the component. In another instance, the remote interface is configured to define the business methods that can be called by the client. In another embodiment, the client is configured to invoke the methods resulting in the updating of the database. Thus, the EJB beans are reusable components that can be accessed by client programs. The application programmer codes the business logic into the EJBs and deploys them into a J2EE compliant server. In one example, the server complying with the J2EE specification provides the required system-level services, thus allowing the application programmer to concentrate on business logic.

The EJB server (i.e., the EJB application) includes an EJB container, which in one example provides the services required by the EJB component. For instance, the EJB container may be configured to include one of an EJB home interface or EJB Remote interface and EJB beans. In one embodiment, the EJB home interface and the EJB remote interface are defined in the same Java virtual machine. In a different embodiment, the EJB home interface and the EJB remote interface may be defined on different Java virtual machines or separate physical computers.

In one example, the EJB specification defines a container as the environment in which one or more EJB components can be executed. In accordance to one example, the EJB container provides the infrastructure required to run distributed components thus allowing the clients and component developers to focus on programming business logic. Simply stated, the container manages the low-level communications between the clients and the EJB beans. In one example, once an EJB bean is created by a client, the client invokes methods on the EJB bean as if the EJB bean were running in the same virtual machine as the client.

Furthermore, the clients are unaware of activities on the EJB bean, since the container is configured to sit between the clients and the EJB beans. For instance, if an EJB bean is passivated, its remote reference on the client remains intact. Thus, when the client later invokes a method on the remote reference, the container activates the EJB bean to service the request.

The EJB container encapsulates:
- The client runtime and generated sub classes. In one example, this allows the client to execute components on a remote server as if the components were local objects.
- The naming service allows the clients to instantiate components by name. It further allows components to obtain resources (e.g., database connections, etc.) by name.
- The EJB server component dispatcher, which in one example, executes the component's implementation class and provides services such as transaction management, database connection pooling, and instance lifecycle management.
   In one example, three types of EJB components can be enumerated.
- Stateful session Beans: A stateful session bean manages complex processes or tasks that require the accumulation of data. They further manage tasks that require more than one method call to complete but are relatively short lived, store session state information in class instance data, and have an affinity between each instance and one client from the time the client creates the instance until it is destroyed by the client or by the server.
- Stateless session Beans: A stateless session bean manages tasks that do not require the keeping of client session data between method calls. Furthermore, the method invocation by a stateless session bean does not depend on data stored by previous method invocations, there is no affinity between a component instance and a particular client, and different instances of the stateless session beans are seemed identical to the client.
- Entity Beans: An entity bean model is a business model that is a real-world object which methods are run on the server machine. When the entity bean method is called, the program's thread stops executing and control is passed to the server. When the method returns from the server, the local thread resumes executing. In one example, the entity beans have the following characteristics: Each instance represents a row in a persistent database relation (e.g., a table, view, etc.); and The bean has a primary key that corresponds to the database relation's key which is represented by a Java data type or class.

Each EJB component further has a transaction attribute configured to determine the manner the instances of the component participate in transactions. As designed, the EJB container provides services which can include transaction and persistence support to the EJB components. As to the transaction support, the EJB container is configured to support transactions. In one example, when the bean is deployed, the EJB container provides the necessary transaction support. In regard to the persistence support, the EJB container is configured to provide support for persistence of the EJB components, which in one embodiment, is defined as the capability of the EJB component to save and retrieve its state. In this manner, the EJB component does not have to be re-created with each use.

In one example, the EJB architecture is a three-tiered architecture in which the clients reside on the first tier, the application server and the components (i.e., EJB beans) reside on the second tier, and the databases reside on the same host as the EJB server. In accordance to one implementation, the EJB server executes methods on a component from the client or another component, retrieves data from databases, and performs other communications. The EJB server further handles the details of transactions, threads, security, database connections, and network communication. Summarily, the EJB clients request business-logic services from EJB beans running on the second-tier. The EJB beans then use the system services provided by the second-tier server to access data from existing systems in the third tier. The EJB beans apply the business rules to the data, and return the results to the clients in the first-tier.

In one example, the client contains the user interface. The business logic is configured to be separate from both the clients and the databases and resides in the same tier (i.e., second tier) as components that analyze data, perform computations, or retrieve information from data sources and processes.

As J2ME, J2EE, and EJBs use the Java^{™} (hereinafter "Java") programming language, in a like manner, an overview of Java is provided below. In operation, a user of a typical Java based system interacts with an application layer of a system generally written by a third party developer. The application layer generally provides the user interface for the system. A Java module is used to process commands received by the application layer. A Java virtual machine is used as an interpreter to provide portability to Java applications. In general, developers design Java applications as hardware independent software modules, which are executed Java virtual machines. The Java virtual machine layer is developed to operate in conjunction with the native operating system of a particular hardware, which represents the physical hardware on which the system operates or runs. In this manner, Java applications can be ported from one hardware device to another without requiring updating of the application code.

Unlike most programming languages, in which a program is compiled into machine-dependent, executable program code, Java classes are compiled into machine independent byte code class files which are executed by a machine-dependent virtual machine. The virtual machine provides a level of abstraction between the machine independence of the byte code classes and the machine-dependent instruction set of the underlying computer hardware. A class loader is responsible for loading the byte code class files as needed, and an interpreter or just-in-time compiler provides for the transformation of byte codes into machine code.

More specifically, Java is a programming language designed to generate applications that can run on all hardware platforms, small, medium and large, without modification. Developed by Sun, Java has been promoted and geared heavily for the Web, both for public Web sites and Intranets. Generally, Java programs can be called from within HTML documents or launched standalone. When a Java program runs from a Web page, it is called a " Java applet," and when run on a Web server, the application is called a "servlet."

Java is an interpreted language. The source code of a Java program is compiled into an intermediate language called "byte code". The byte code is then converted (interpreted) into machine code at runtime. Upon finding a Java applet, the Web browser invokes a Java interpreter (Java Virtual Machine), which translates the byte code into machine code and runs it. Thus, Java programs are not dependent on any specific hardware and will run in any computer with the Java Virtual Machine software. On the server side, Java programs can also be compiled into machine language for faster performance. However a compiled Java program loses hardware independence as a result.

### II. Digital Content Preview User Interface for Mobile Devices

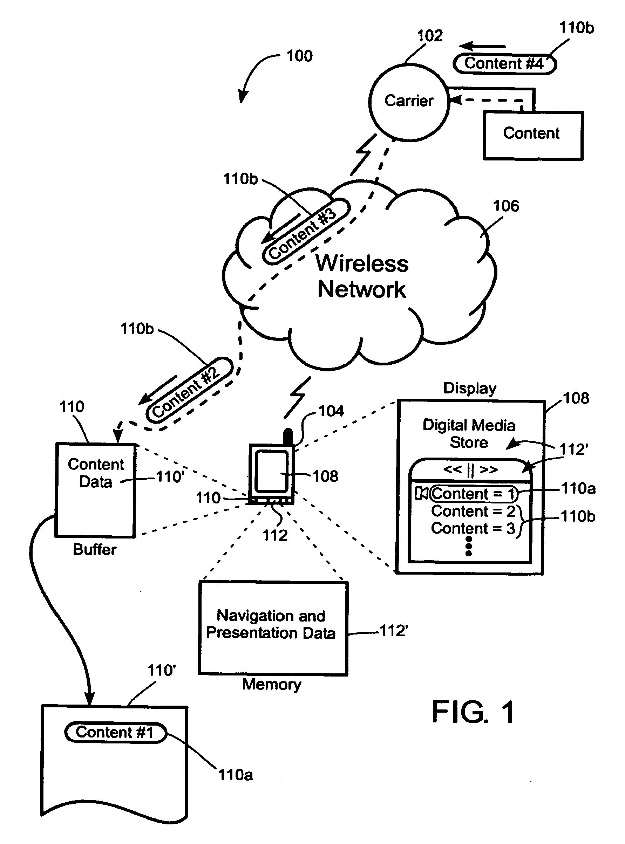

Keeping the overviews to J2EE, J2ME, EJBs, and Java in mind, reference is made to Figure 1. Figure 1 illustrates a system 100 for enabling a mobile device 104 to communicate with a carrier 102 over a wireless network 106. The mobile device 104 includes a display screen 108 and other common electronics that will communication over a wireless network 106. In addition, the mobile device will include a memory 112 for storing data. In this embodiment, the memory 112 will also include pre-stored navigation and presentation data 112'. The navigation and presentation data will be locally stored on the mobile device 104 while content is capable of being accessed from the carrier 102. As mentioned previously, the carrier 102 may be a wireless phone carrier or wireless device carrier that provides access to digital content and other services.

In one embodiment, the memory 112 combined with a buffer 110 will facilitate the rendering and display of data on the display screen 108 of the mobile device 104. When a user desires to access a particular storefront provided by the carrier 102, the user will be presented with options for selecting different types of media available for purchase (*e.g*., via an electronic commerce transaction) or sampling. In one example, the user of the mobile device 104 may be accessing the storefront provided by the carrier 102 to access multimedia data such as ringtones that can be downloaded to the mobile device 104. If the user desires to enter "ringtones", the user will be provided with a listing of different types of ringtones.

As shown in display screen 108, the display screen may include the navigation and presentation data 112 in addition to a listing of content data 110'. As shown, the content data 110' is generically represented by content #1 110a, and content #2 and #3 110b. In this example, content # 110a is shown with a speaker noting that the user is provided with automatic play of the particular content #1 in the listing displayed in the screen 108. The content #1 and #3, however, may not have yet been downloaded from the carrier 102.

In accordance with one embodiment, content #1 and content #2 will automatically start to download from the carrier 102 and stored in the buffer 110. Although the user may not have selected to listen to the content #1 and content #2 at this point, the content is nevertheless automatically being downloaded to the buffer 110 while the user is viewing the current display screen with the listing of different types of content. In this manner, the user can scroll up and down the listing and select other contents for listening.

Because content #2 was automatically downloaded without requiring the user to select content #2 on the display screen, when the user selects content #2, the data will already have been stored in the buffer 110, allowing a smooth transition into the next content for the user to listen. Thus, by triggering a download of all contents identified on the display screen listing for the particular screen, the user is provided with a listing of contents that should already have been downloaded for the user when selection is made of the different contents to sample. That is, the content should already be present in the buffer 110 and available for immediate play.

Advantageously, the user does not need to scroll down to different contents on the display screen 108, click on the particular content, and then wait for the content to be downloaded. In addition, because the navigation and presentation data 112 is locally present on a mobile device 104, it is possible to present to the user a smooth navigational environment that is not tied to click-and-download.

In one embodiment, the user may select to move to a different screen that includes a different listing of contents 110. In that circumstance, the buffer 110 of the previous display screen will be emptied and the content listing of the new screen will commence downloading to the buffer 110 to allow the user to navigate through the different listings of content for that new screen. As noted above, the navigation and presentation data 112 for the new screen will be provided from a local memory 112 of the mobile device 104.

Initially, the first listing of the new content for the new screen will begin to play for the user. The user can opt to pause the content as it is being played and move to another content that may be listed in the new screen. Because the content that is associated with the new screen is all triggered for download, when the new screen appears, the user will be provided with access to the different content options on the new screen and such data will be downloaded to the buffer 110 to allow the user immediate access.

Although there may be a slight delay when a user shifts to a new screen, each of the content items are downloaded to the content data buffer 110 without requiring the user to initially click on a particular content to specifically download it. In this manner, if the user desires to listen to a particular content item in the listing, the time during which the user listens to the particular selected content will be used for downloading the rest of the content that may be presented in the listing for the particular screen. As such, when the user moves to the next content on the screen, that content should have already been downloaded or may have already commenced downloading, thus reducing the wait for the user navigating through the different content of the display screen.

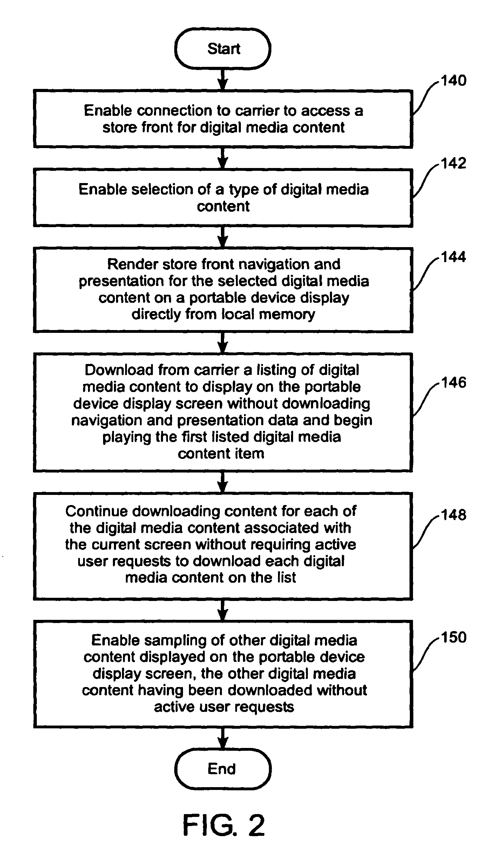

Figure 2 illustrates a flowchart diagram of a method implementing in the acquisition and display of content on a display screen of a mobile device. The method begins at operation 140 where connection to a carrier is enabled to access a storefront for digital media content. As noted above, the digital media content can include any number of digital media such as games, ringtones, music, wallpaper, and the like. Once the user is connected to the storefront, the method moves to operation 140 where the user is allowed to select a type of digital media content from the storefront.

For example, the user may desire to access ringtones from a ringtone store, and the screen will move to the ringtone store to allow the user to process selections for a possible purchase. Next, the method moves to operation 144 where the storefront navigation and presentation data is rendered for the selected digital media content on display directly from a local memory. The navigation and presentation screen may include any of the graphics, toggle buttons, selection icons, pull downs, organizational data, and the like. The navigational presentation data is stored locally on the memory of the portable device to avoid having to download this information from a remote carrier over a wireless connection.

In operation 146, a listing of digital media content is downloaded from the carrier to display the information on the portable device display screen without downloading the navigation and presentation data. While the digital data content is being downloaded for a content item, the device, in one embodiment, may begin playing the first listed digital media content item. In one example, playing the digital media content item may include playing a ringtone, playing a clip of a song, displaying a wallpaper, displaying a screenshot of a movie trailer or displaying an animation trailer of a game or video clip. In operation 148, the content for each of the digital media content associated with the current screen will continue to download the background without requiring active user requests (*i*.*e*., clicks) to download each digital media content on the list. The background downloading will then store the digital content onto a separate buffer of the mobile device.

Because the display screen initially will allow the user to play the first listed digital media content, the user's attention will initially be drawn to the first listed item which is being presented. During this time, however, the other digital content associated with the current screen will continue to be downloaded and stored in the buffer. Thus, when the user desires to stop the first digital media content item and move to another digital media content item displayed on the screen, the other digital media content item should already have been downloaded for the user to instantly interact with that digital media item. As noted above, because the background downloading occurs when the user moves to a new screen, the buffer will be flushed with the previously stored digital media content. Then, the buffer will begin to fill up again with the digital media content of the new screen to which the user has moved on to navigate.

The process operations of 144 to 150 will then repeat for each time the user moves to a different screen and different content items are provided by that screen. Thus, each time a user traverses to a new screen, the buffer will be refreshed with the new data for the content of that screen and the navigation to the different screens will be provided locally from the navigation and presentation data stored in the memory 112 of the mobile device 104 as shown in Figure 1.

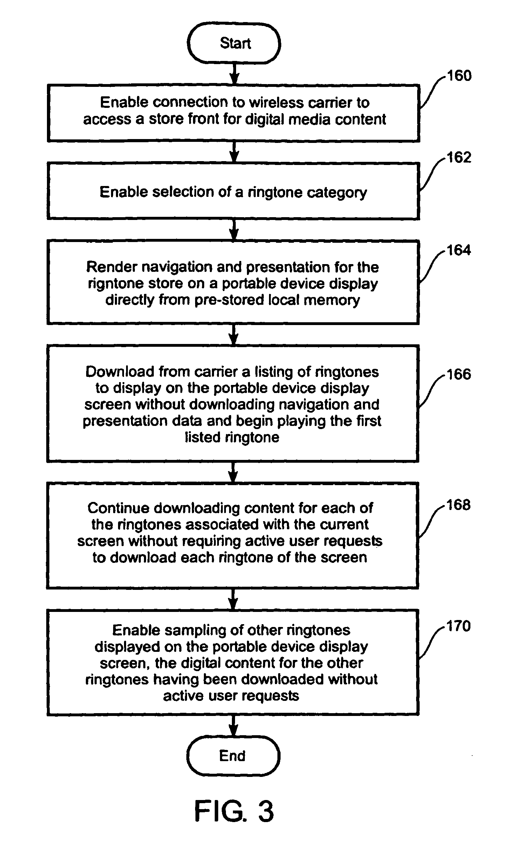

Figure 3 illustrates a detailed example of the case where the digital media content is represented as ringtones for a mobile device, such as a wireless phone. The method begins at operation 160 where a connection to the wireless carrier is enabled to access a storefront for the digital content. The method then moves to an operation 162 where the user may select a ringtone category. For instance, the user may be desiring to purchase a new ringtone that will be stored on the wireless phone so that incoming calls will sound with the new ringtone. The method then moves to operation 164 where navigation and presentation for the ringtone store is rendered on the portable device display screen directly from pre-stored local memory.

Each of the display screens that are part of the storefront and associated categories such as the ringtone category, will be preferably stored locally on the wireless phone. Although, in some embodiments, minor data items of a navigation or presentation item may be downloaded from the carrier in special circumstances. The method then moves to operation 166 where a listing of ringtones is downloaded from the carrier to the screen of the portable device (i.e., wireless phone) without downloading navigation and presentation data. In one embodiment, the first listed ringtone in a list of ringtones of a particular screen may begin to play for the user to enable the user to select such ringtone for purchase. While the first listed ringtone begins playing, the content for each of the ringtones associated with the current screen, will continue to background download without requiring active user requests to download each ringtone of the screen.

Thus, in operation 168, the content is stored into the buffer of the wireless phone so that when the user moves to other ringtones in operation 170, the other ringtones will be already downloaded and ready for the user to instantly interact with. As the user moves from screen to screen, the buffer holding the downloaded digital data (ringtones), will be emptied and the process will repeat to enable presentation and downloading of the different digital content of a particular screen in a smooth interactive manner.

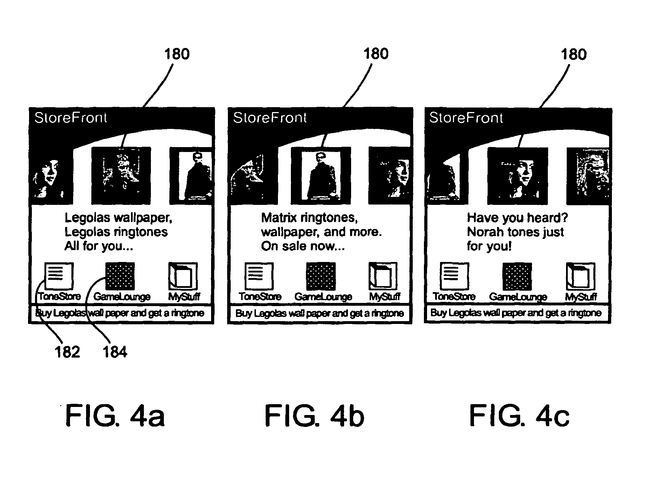

Figures 4A through 4C illustrate exemplary storefront displays that may be provided on the mobile device 104. As shown, the user is provided with selection capability by placing the selected category in the center 180 of the storefront screen. Also shown is an icon for the tone store 182 and a game lounge 184. It should be noted that other icons for a music store, a wallpaper store, and other stores may also be presented as part of the storefront.

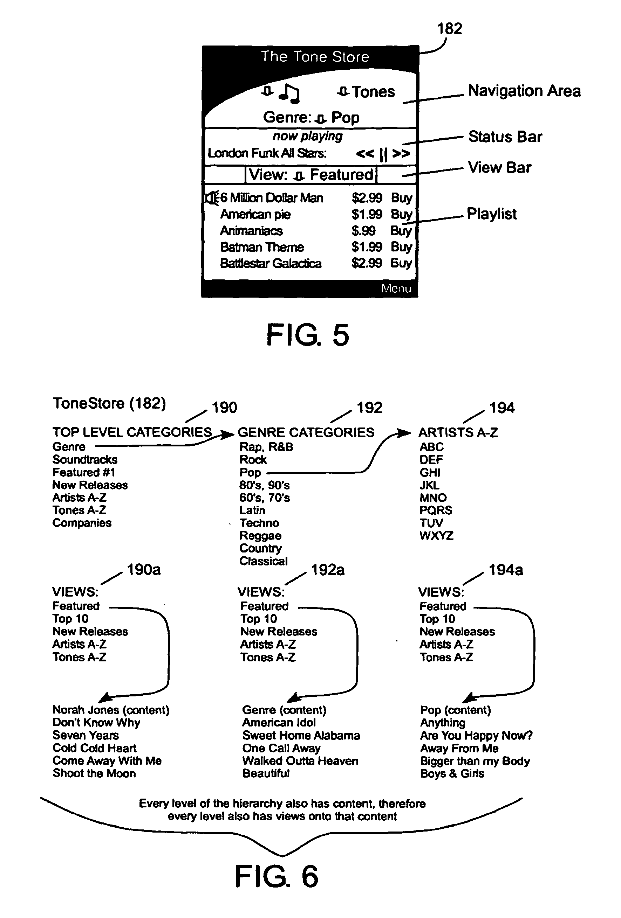

Figure 5 illustrates an example screenshot of the tone store 182. The tone store 182 including navigation area, a status bar, a view bar, and play list. The play list includes a listing of different types of content that are available in this example. In addition, the list will include prices for the particular content as well as a BUY icon to enable the user to purchase a particular content item. The view bar will allow the user to select different types of views for the play list shown in the tone store 182.

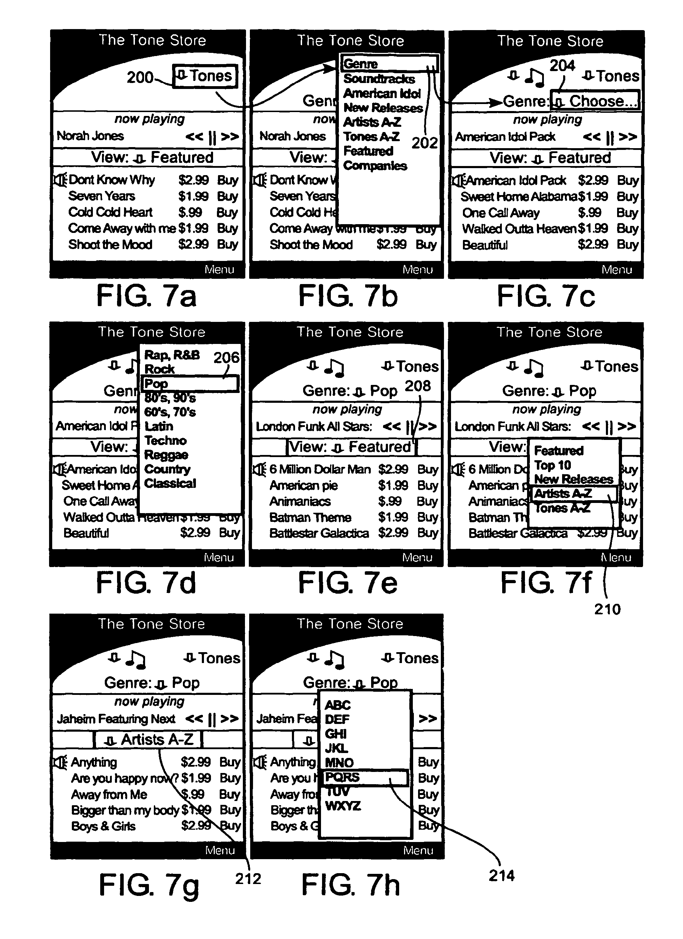

Figure 6 illustrates an organizational layout of the different screens associated with the tone store 182. As shown, they will include a top level categories 190, a genre categories 192, and an artist's category by an alphabetical listing 194. The views 190a is associated with the top level categories which will include a feature item which is shown as Norah Jones. If the user is viewing from the genre categories 192, the views 192a will begin with the featured item for genre which will be a number of different types of genres which may be featured for that screen. The views 194a will be associated with artists in alphabetical listing and will be shown a feature view of items in alphabetical order. As noted, every level of the hierarchy also has content and therefore, every level also has view onto that content. With this organizational diagram of Figure 6 in mind, reference is now made to Figures 7A through 7H.

Figures 7A through 7H illustrate exemplary display screens for the different views possible when navigating through the tone store 182. The user may begin with the screen in Figure 7A after selecting the item tones 200. As shown, the content items in the listing may already begin playing the ringtone "Don't Know Why" which lists for an exemplary price of $2.99. As mentioned above, the remaining items in the list will already have been commenced downloading to the buffer without having the user to actually select the next item in the content list and then wait for its downloading. In Figure 7B, however, the data has not been flushed yet because the user has simply selected tones 200 which brings down a drop down menu in Figure 7B. In the drop down menu of Figure 7B, the user may select genre 102. When selecting the genre 102 in Figure 7B, the user will be presented with the selection item 204 to choose the particular genre in Figure 7C. Figure 7D shows a listing of the different types of genre that are in response to the selection of the choose button 204. The user may select pop 206 in Figure 7D which will present the screen in Figure 7E where pop is selected for genre. When the user selects the view icon 208 in Figure 7E, the screen drops down with a menu in Figure 7F to provide a listing of different types of views.

The views can include featured, top 10, new releases, artists a-z, tones, a-z. In this example, the user has selected artists a-z by selecting 210 in Figure 7F. The next screen shown in Figure 7G will illustrate that the user has artists a-z. However, the user may then again select artist a-z in the new button by selecting 212 which then brings popdown menu in Figure 7H. The user can then select the listing of the artists PQRS 214 in Figure 7H. With the navigational process in mind, it should be again noted that the navigational screens and presentation associated with them are stored locally on the mobile device in a memory. The memory can be any type of memory such as a re-writeable memory that can store such information to enable future updates if needed.

During the process followed by the user in traversing through Figure 7A to Figure 7H, the content buffer on the device was flushed between Figures 7B and 7C since the content data on that screen changed. Next, the content data was flushed again between the transitions between Figures 7D and 7E. And once again, the data was flushed from the buffer between the transitions that occurred between Figures 7F and 7G. However, while the user was navigating between Figures 7A and 7B, the content in the content listing was being downloaded for all of the contents listed for that screen while the user was navigating through the different screen selection items. Consequently, had the user decided to listen to a particular content item in the listing, that content item should have been downloaded in the background and stored on the buffer so that the user could easily listen to the next selected ringtone without any delays for downloading.

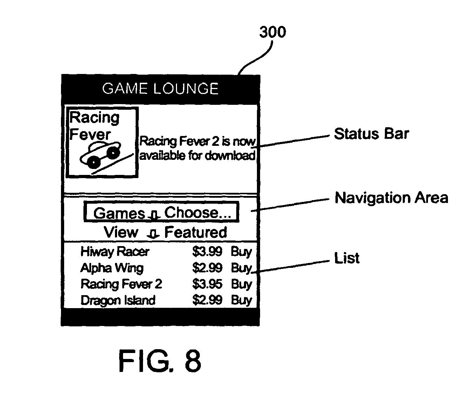

Figure 8 illustrates another embodiment in which a game lounge screen 300 illustrates the possibility to access, display, and background download other types of media other than ringtones. In this example, the status bar may also show information regarding the particular game being featured for the particular screen selection. The screen will also include a navigation area that will allow the user to navigate to select other games as well as select other views. The list area will include a listing of the different types of games which, similar to ringtones, will be displayed in the listing and the content for each of the listings will be downloaded in the background one after another, into a buffer.

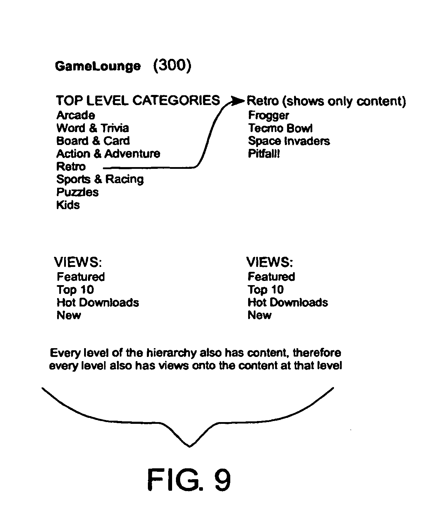

Figure 9 illustrates categories for the game lounge 300. The categories may include a top level categories which lists a number of types of games. For the top level categories, the user will be provided with particular views such as featured, top 10, hot downloads, and new. If the user selects retro, for example, the user will be provided with a new screen of information and a listing of different types of games for retro. For that retro selection, the user will be provided with different types of views such as the ones previously described.

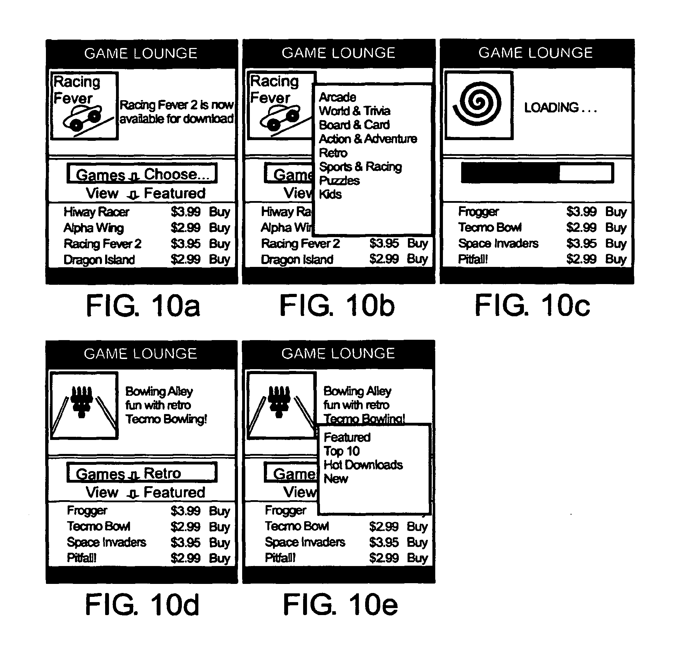

Figures 10A through 10E illustrate the navigation that is possible through the game lounge which allows the user to navigate through the different screens using the navigation and presentation data stored on the mobile device, and listings of data that are downloaded for each of the games in the background for the user. If the user decides to change screens and move to a different type of game type, such as retro in Figure 10B, the game information in the status bar section may be downloaded for the user to view a clip of the game. In another embodiment, the clip may be a still picture, or a series of pictures that will be played for the user in a video clip manner.

Figures 10D and 10E illustrate the user interactively using the navigation area to change the different views provided for the user. Thus, so long as the user remains in retro, the games in the listing will continue to download in the background if they have not already been downloaded to the buffer of the portable device. Thus, the user can then move to other games such as frogger, tecno bowl, space invaders, pitfall, and the like.

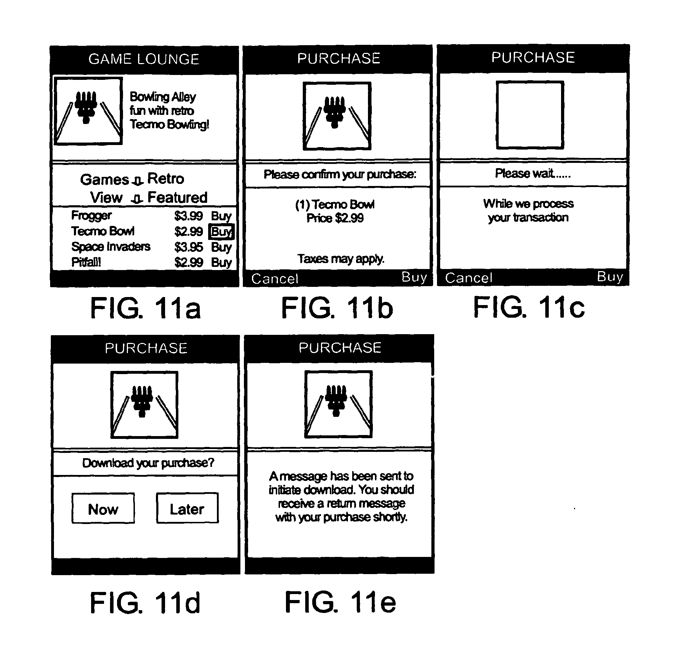

Figures 11A through 11E illustrate the process that a user took to purchase tecno bowl as shown in Figure 11A. When the user clicks the buy button 400, the user is prompted to proceed through screens in Figure 11B, 11C, 11D, and 11E. In Figure 11D, the user is asked if they want to download the purchase now or later. In one embodiment, part of the game preview may already be downloaded in the buffer of the portable device and the game will need to be downloaded to create the fully functioning game. In another instance, the game may completely already be downloaded in the buffer of the portable device and the selection of Download Your Purchase Now would simply activate that game that was previously purchased into a fully functioning game once it is confirmed that the user has purchased and paid for the selected game. In another embodiment, the buffer will only hold a preview sequence of images of a preview the game, and a next step would include installing the game from another new download.

Although specific reference is made to terminology defined by Sun Microsystems, Inc., it should be understood that any name can be used for such terms, so long as the desired functionality is achieved. The same applies to the underlying environment for the device. The device can be any mobile device, and the device may run any operating system. The operating system can support any communication protocol, including protocols for downloading application files. Accordingly, any reference to a particular standard should be viewed only as exemplary and focus should be placed on the claimed functional operation.

With the above embodiments in mind, it should be understood that the invention may be practiced with other computer system configurations including hand-held devices, microprocessor systems, microprocessor-based or programmable consumer electronics, minicomputers, mainframe computers and the like. Furthermore, the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, or it may be a general-purpose computer selectively activated or configured by a computer program stored in the computer. In particular, various general-purpose machines may be used with computer programs written in accordance with the teachings herein, or it may be more convenient to construct a more specialized apparatus to perform the required operations.

The invention can also be embodied as computer readable code on a computer readable medium. The computer readable medium is any data storage device that can store data which thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Furthermore, although the present invention implements Java programming language, other programming languages may be used to implement the embodiments of the present invention (e.g., C, C++, any object oriented programming language, etc.).

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein.

## Claims

1. A computer implemented method for handling access to digital media content over a wireless connection (106), comprising:
enabling selection, through a wireless device (104), of a type of digital media content over the wireless connection (106);
rendering storefront navigation and presentation data (112') for a type of digital media content selected, the storefront navigation and presentation data (112') being rendered from local memory (112) of the wireless device (104), such that the storefront navigation and presentation data (112') is not downloaded over the Wireless connection (106); and
downloading a listing of digital media content (110') to display on a screen (108) of the wireless device (104) upon navigating to the storefront, and downloading each of the digital media content (110a, 110b) of the listing (110') without requiring specific selection of the digital media content of the listing, and the storefront navigation and presentation data (112') includes data for interfacing with each of the digital media content that is downloaded.

2. A computer implemented method for handling access to digital media content over a wireless connection (106) as recited in claim 1, wherein the each of the digital media content (110a, 110b) that has been downloaded is available for sampling or purchase by way of an electronic commerce transaction.

3. A computer implemented method for handling access to digital media content over a wireless connection (106) as recited in claim 1 or 2, wherein the navigation and presentation data (112') enables selection and interaction with the digital media content to facilitate sampling, sampling and purchase, or purchase.

4. A computer implemented method for handling access to digital media content over a wireless connection (106) as recited in claim 1, 2 or 3, wherein the digital media content includes any one of ringtones for cellular phones, games and applications for portable devices, audio content for portable devices, images for portable devices, or video content for portable display devices.

5. A computer implemented method for handling access to digital media content over a wireless connection (106) as recited in any preceding claim, wherein the navigation and presentation data enables selection of different screens that identify different storefronts (182, 300), each storefront identifying a type of digital media content.

6. A computer implemented method for handling access to digital media contents over a wireless connection (106) as recited in claim 5, wherein navigating to different screens stops the downloading of digital media content (110a, 110b) for a current screen and starts the automatic download of digital media content associated with a new screen.

7. A portable electronic device (104), the portable electronic device being configured to handle access to digital media content over a wireless connection (106), comprising:
memory (112) for storing navigation and presentation data (112'), the navigation and presentation data enabling interfacing with digital media content obtained over the wireless connection (106);
means for enabling selection of a type of digital media content over the wireless connection (106);
means for rendering storefront navigation and presentation data (112') for a type of digital media content selected, the storefront navigation and presentation data (112') being rendered from the memory (112);
a screen (108) for displaying graphics associated with the storefront;
means for downloading a listing of digital media content (110') to display on a screen (108) of the wireless device (104) upon navigating to the storefront, and for downloading each of the digital media content (110a, 110b) of the listing (110') without requiring specific selection of the digital media content of the listing.

8. A portable electronic device as recited in claim 7, wherein the particular type of digital media content includes any one of or a combination of ringtones for cellular phones, games and applications for portable devices, audio content for portable devices, images for portable devices, or video content for portable display devices.

9. A computer implemented method for handling access to digital media content over a wireless connection (106), comprising:
downloading a listing of digital media content (110') to display on a wireless device, and downloading each of the digital media content (110a, 110b) of the listing without requiring specific selection of the digital media content of the listing (110');
wherein the wireless device (104) enables selection of a type of digital media content over the wireless connection (106) and renders storefront navigation and presentation data (112') for a selected type of digital media content, the storefront navigation and presentation data (112') being rendered from local memory (112) of the wireless device, the storefront navigation and presentation data (112') including data for interfacing with each of the digital media content that is downloaded.

10. An apparatus (102) for handling access to digital media content over a wireless connection (106), comprising:
means for downloading a listing of digital media content (110') to display on a wireless device, and downloading each of the digital media content (110a, 110b) of the listing without requiring specific selection of the digital media content of the listing (110');
wherein the wireless device is configured to enable selection of a type of digital media content over the wireless connection (106) and to render storefront navigation and presentation data (112') for a type of digital media content selected, the storefront navigation and presentation data (112') being rendered from local memory (112) of the wireless device (104), the storefront navigation and presentation data including data for interfacing with each of the digital media content that is downloaded.

11. A computer readable medium carrying computer readable program code to cause a computer to carry out a method according to any one of claims 1 to 6.

12. A computer readable medium carrying computer readable code configured to cause a computer to carry out a method according to claim 9.

## Patentansprüche

1. Computer-implementiertes Verfahren zum Behandeln eines Zugriffs auf einen digitalen Medieninhalt über eine drahtlose Verbindung (106), umfassend:
Ermöglichen einer Auswahl, durch eine drahtlose Einrichtung (104), eines Typs von digitalem Medieninhalt über die drahtlose Verbindung (106);
Bereitstellen von Geschäftsvorderseiten-Navigations- und Präsentationsdaten (112') für einen Typ von digitalem Medieninhalt, der gewählt wird, wobei die Geschäftsvorderseiten-Navigations- und Präsentationsdaten (112') von einem lokalen Speicher (112) der drahtlosen Einrichtung (104) bereitgestellt werden, so dass die Geschäftsvorderseiten-Navigations- und Präsentationsdaten (112') über die drahtlose Verbindung (106) nicht heruntergeladen werden; und
Herunterladen einer Auflistung des digitalen Medieninhalts (110') zur Anzeige auf einem Bildschirm (108) der drahtlosen Einrichtung (104), auf eine Navigation zu der Geschäftsvorderseite hin, und Herunterladen jedes digitalen Medieninhalts (110a, 110b) der Auflistung (110'), ohne eine spezifische Auswahl des digitalen Medieninhalts der Auflistung zu erfordern, und wobei die Geschäftsvorderseiten-Navigations- und Präsentationsdaten (112') Daten zur Kopplung mit jedem digitalen Medieninhalt, der heruntergeladen wird, einschließt.

2. Computer-implementiertes Verfahren zum Behandeln eines Zugriffs auf einen digitalen Medieninhalt über eine drahtlose Verbindung (106) nach Anspruch 1, wobei jeder digitale Medieninhalt (110a, 110b), der heruntergeladen worden ist, zum Sampling oder für einen Kauf mit Hilfe einer Elektronikgeschäfts-Transaktion verfügbar ist.

3. Computer-implementiertes Verfahren zum Behandeln eines Zugriffs auf einen digitalen Medieninhalt über eine drahtlose Verbindung (106) nach Anspruch 1 oder 2, wobei die Navigations- und Präsentationsdaten (112') eine Auswahl und eine Interaktion mit dem digitalen Medieninhalt erlauben, um ein Sampling, ein Sampling und einen Kauf, oder einen Kauf zu ermöglichen.

4. Computer-implementiertes Verfahren zum Behandeln eines Zugriffs auf einen digitalen Medieninhalt über eine drahtlose Verbindung (106) nach Anspruch 1, 2 oder 3, wobei der digitale Medieninhalt Klingeltöne für zellulare Telefone und/oder Spiele und/oder Anwendungen für tragbare Einrichtungen und/oder einen Audioinhalt für tragbare Einrichtungen und/oder Bilder für tragbare Einrichtungen und/oder einen Videoinhalt für tragbare Anzeigeeinrichtungen umfasst.

5. Computer-implementiertes Verfahren zum Behandeln eines Zugriffs auf einen digitalen Medieninhalt über eine drahtlose Verbindung (106) nach irgendeinem vorangehenden Anspruch, wobei die Navigations- und Präsentationsdaten eine Auswahl von unterschiedlichen Bildschirmen erlaubt, die unterschiedliche Geschäftsvorderseiten (182, 300) identifizieren, wobei jede Geschäftsvorderseite einen Typ von digitalem Medieninhalt identifiziert.

6. Computer-implementiertes Verfahren zum Behandeln eines Zugriffs auf einen digitalen Medieninhalt über eine drahtlose Verbindung (106) nach Anspruch 5, wobei ein Navigieren auf unterschiedliche Bildschirme das Herunterladen von digitalem Medieninhalt (110a, 110b) für einen gegenwärtigen Bildschirm stoppt und die automatische Herunterladung von digitalem Medieninhalt, der mit einem neuen Bildschirm assoziiert ist, startet.

7. Tragbare elektronische Einrichtung (104), wobei die tragbare elektronische Einrichtung konfiguriert ist, um einen Zugriff auf einen digitalen Medieninhalt über eine drahtlose Verbindung (106) zu behandeln, umfassend:
einen Speicher (112) zum Speichern von Navigations- und Präsentationsdaten (112'), wobei die Navigations- und Präsentationsdaten eine Kopplung mit einem digitalen Medieninhalt, der über die drahtlose Verbindung (106) erhalten wird, ermöglichen;
eine Einrichtung zum Ermöglichen einer Auswahl eines Typs des digitalen Medieninhalts über die drahtlose Verbindung (106);
eine Einrichtung zum Bereitstellen von Geschäftsvorderseiten-Navigations- und Präsentationsdaten (112') für einen Typ von digitalem Medieninhalt, der gewählt wird, wobei die Geschäftsvorderseiten-Navigations- und Präsentationsdaten (112') von dem Speicher (112) bereitgestellt werden;
einen Bildschirm (108) zum Anzeigen von Graphiken, die mit der Geschäftsvorderseite assoziiert sind;
eine Einrichtung zum Herunterladen einer Auflistung von digitalem Medieninhalt (110') zur Anzeige auf einem Bildschirm (108) der drahtlosen Einrichtung (104), auf ein Navigieren zu der Geschäftsvorderseite hin, und zum Herunterladen jedes digitalen Medieninhalts (110a, 110b) der Auflistung (110'), ohne eine spezifische Auswahl des digitalen Medieninhalts der Auflistung zu erfordern.

8. Tragbare elektronische Einrichtung nach Anspruch 7, wobei der bestimmte Typ von digitalem Medieninhalt eine Kombination von Klingeltönen für zellulare Telefone und/oder Spiele und/oder Anwendungen für tragbare Einrichtungen und/oder einen Audioinhalt für tragbare Einrichtungen und/oder Bilder für tragbare Einrichtungen und/oder einen Videoinhalt für tragbare Anzeigeeinrichtungen umfasst.

9. Computer-implementiertes Verfahren zum Behandeln eines Zugriffs auf einen digitalen Medieninhalt über eine drahtlose Verbindung (106), umfassend die folgenden Schritte:
Herunterladen einer Auflistung von digitalem Medieninhalt (110') zur Anzeige auf einer drahtlosen Einrichtung, und Herunterladen jedes digitalen Medieninhalts (110a, 110b) der Auflistung, ohne eine spezifische Auswahl des digitalen Medieninhalts der Auflistung (110') zu erfordern;
wobei die drahtlose Einrichtung (104) eine Auswahl eines Typs von digitalem Medieninhalt über die drahtlose Verbindung (106) erlaubt und Geschäftsvorderseiten-Navigations- und Präsentationsdaten (112') für einen gewählten Typ des digitalen Medieninhalts bereitstellt, wobei die Geschäftsvorderseiten-Navigations- und Präsentationsdaten (112') von einem lokalen Speicher (112) der drahtlosen Einrichtung bereitgestellt werden, wobei die Geschäftsvorderseiten-Navigations- und Präsentationsdaten (112') Daten zur Kopplung mit jedem digitalen Medieninhalt, der heruntergeladen wird, einschließen.

10. Vorrichtung (102) zum Behandeln eines Zugriffs auf einen digitalen Medieninhalt über eine drahtlose Verbindung (106), umfassend:
eine Einrichtung zum Herunterladen einer Auflistung von digitalem Medieninhalt (110') zur Anzeige auf einer drahtlosen Einrichtung, und Herunterladen von jedem digitalen Medieninhalt (110a, 110b) der Auflistung, ohne eine spezifische Auswahl des digitalen Medieninhalts der Auflistung (110') zu erfordern;
wobei die drahtlose Einrichtung konfiguriert ist, um eine Auswahl eines Typs von digitalem Medieninhalt über die drahtlose Verbindung (106) zu ermöglichen und Geschäftsvorderseiten-Navigations- und Präsentationsdaten (112') für einen Typ von digitalem Medieninhalt, der gewählt wird, bereitzustellen, wobei die Geschäftsvorderseiten-Navigations- und Präsentationsdaten (112') von einem lokalen Speicher (112) der drahtlosen Einrichtung (104) bereitgestellt werden, wobei die Geschäftsvorderseiten-Navigations- und Präsentationsdaten Daten zur Kopplung mit jedem digitalen Medieninhalt, der heruntergeladen wird, einschließen.

11. Von einem Computer lesbares Medium, welches einen von einem Computer lesbaren Programmcode trägt, um einen Computer zu veranlassen, ein Verfahren nach irgendeinem der Ansprüche 1-6 auszuführen.

12. Von einem Computer lesbares Medium, das einen von einem Computer lesbaren Code trägt, der konfiguriert ist, um einen Computer zu veranlassen, ein Verfahren nach Anspruch 9 auszuführen.

## Revendications

1. Procédé implémenté par ordinateur pour gérer l'accès à un contenu de média numérique par l'intermédiaire d'une connexion sans fil (106), comprenant:
la validation de sélection, à travers un dispositif sans fil (104), d'un type de contenu de média numérique par l'intermédiaire de la connexion sans fil (106);
la fourniture de données de navigation de vitrine virtuelle et de présentation (112') pour un type de contenu de média numérique sélectionné, les données de navigation de vitrine virtuelle et de présentation (112') étant fournies à partir d'une mémoire locale (112) du dispositif sans fil (104), pour que les données de navigation de vitrine virtuelle et de présentation (112') ne soient pas téléchargées par la connexion sans fil (106); et
le téléchargement d'un listing de contenu de média numérique (110') pour affichage sur un écran (108) du dispositif sans fil (104) lors de la navigation de la vitrine virtuelle, et téléchargement de chaque contenu de média numérique (110a, 110b) du listing (110') sans requérir une sélection spécifique du contenu de média numérique du listing, et les données de navigation de vitrine virtuelle et de présentation (112') comprennent des données pour l'interfaçage avec chaque contenu de média numérique qui est téléchargé.

2. Procédé implémenté par ordinateur pour gérer l'accès à un contenu de média numérique par l'intermédiaire d'une connexion sans fil (106) selon la revendication 1, dans lequel chaque contenu de média numérique (110a, 110b) qui a été téléchargé est disponible pour l'échantillonnage ou l'achat au moyen d'une transaction de commerce électronique.

3. Procédé implémenté par ordinateur pour gérer l'accès à un contenu de média numérique par l'intermédiaire d' une connexion sans fil (106) selon la revendication 1 ou 2, dans lequel les données de navigation de vitrine virtuelle et de présentation (112') permettent une sélection et une interaction avec le contenu de média numérique pour faciliter l'échantillonnage, l'échantillonnage et l'achat, ou l'achat.

4. Procédé implémenté par ordinateur pour gérer l'accès à un contenu de média numérique par l'intermédiaire d'une connexion sans fil (106) selon la revendication 1, 2 ou 3, dans lequel le contenu de média numérique comprend un quelconque des éléments suivants: des tonalités de sonnerie pour des téléphones cellulaires, des jeux et des applications pour des dispositifs portables, un contenu audio pour des dispositifs portables, des images pour des dispositifs portables, ou un contenu vidéo pour des dispositifs d'affichage portables.

5. Procédé implémenté par ordinateur pour gérer l'accès à un contenu de média numérique par l'intermédiaire d'une connexion sans fil (106) selon l'une quelconque des revendications précédentes, dans lequel les données de navigation et de présentation permettent la sélection de différents écrans qui identifient différentes vitrines virtuelles (182, 300), chaque vitrine virtuelle identifiant un type de contenu de média numérique.

6. Procédé implémenté par ordinateur pour gérer l'accès à un contenu de média numérique par l'intermédiaire d'une connexion sans fil (106) selon la revendication 5, dans lequel la navigation vers différents écrans arrête le téléchargement de contenu de média numérique (110, 110b) pour un écran courant et commence le téléchargement automatique de contenu de média numérique associé à un nouvel écran.

7. Dispositif électronique portable (104), le dispositif électronique portable étant configuré pour gérer l'accès à un contenu de média numérique par l'intermédiaire d'une connexion sans fil (106), comprenant:
une mémoire (112) pour stocker des données de navigation et de présentation (112'), les données de navigation et de présentation permettant l'interfaçage avec un contenu de média numérique obtenu par l'intermédiaire d'la connexion sans fil (106);
un moyen pour permettre la sélection d'un type de contenu de média numérique par l'intermédiaire de la connexion sans fil (106);
un moyen pour rendre des données de navigation de vitrine virtuelle et de présentation (112') pour un type de contenu de média numérique sélectionné, les données de navigation de vitrine virtuelle et de présentation (112') étant fournies à partir de la mémoire (112);
un écran (108) pour afficher des graphiques associées à la vitrine virtuelle;
un moyen pour télécharger un listing de contenu de média numérique (110') pour affichage sur un écran (108) du dispositif sans fil (104) lors de la navigation sur la vitrine virtuelle, et pour télécharger chaque contenu de média numérique (110a, 110b) du listing (110') sans requérir la sélection spécifique du contenu de média numérique du listing.

8. Dispositif électronique portable selon la revendication 7, dans lequel le type particulier de contenu de média numérique comprend un quelconque des éléments suivants: une combinaison de tonalités de sonnerie pour des téléphones cellulaires, des jeux et des applications pour des dispositifs portables, un contenu audio pour des dispositifs portables, des images pour des dispositifs portables, ou un contenu vidéo pour des dispositifs d'affichage portables.

9. Procédé implémenté par ordinateur pour gérer l'accès à un contenu de média numérique par l'intermédiaire d'une connexion sans fil (106) comprenant:
le téléchargement d'un listing de contenu de média numérique (110') pour affichage par l'intermédiaire d'un dispositif sans fil, et téléchargement de chaque contenu de média numérique (110a, 110b) du listing sans requérir une sélection spécifique du contenu de média numérique du listing (110');
dans lequel le dispositif sans fil (104) permet la sélection d'un type de contenu de média numérique par l'intermédiaire de la connexion sans fil (106) et rend les données de navigation de vitrine virtuelle et de présentation (112') pour un type sélectionné de contenu de média numérique, les données de navigation de vitrine virtuelle et de présentation (112') étant fournies à partir de la mémoire locale (112) du dispositif sans fil, les données de navigation de vitrine virtuelle et de présentation (112') comprenant des données pour l'interfaçage avec chaque contenu de média numérique qui est téléchargé.

10. Appareil (102) pour gérer l'accès à un contenu de média numérique par l'intermédiaire d'une connexion sans fil (106), comprenant:
un moyen pour télécharger un listing de contenu de média numérique (110') pour l'affichage par l'intermédiaire d'un dispositif sans fil, et téléchargement de chaque contenu de média numérique (110a, 110b) du listing sans requérir une sélection spécifique du contenu de média numérique du listing (110');
dans lequel le dispositif sans fil est configuré pour permettre la sélection d'un type de contenu de média numérique par l'intermédiaire de la connexion sans fil (106) et pour rendre les données de navigation de vitrine virtuelle et de présentation (112') pour un type de contenu de média numérique sélectionné, les données de navigation de vitrine virtuelle et de présentation (112') étant fournies à partir d'une mémoire locale (112) du dispositif sans fil (104), les données de navigation de vitrine virtuelle et de présentation comprenant des données pour l'interfaçage avec chaque contenu de média numérique qui est téléchargé.

11. Support lisible par ordinateur portant un code de programme lisible par ordinateur pour obliger un ordinateur à réaliser un procédé selon l'une quelconque des revendications 1 à 6.

12. Support lisible par ordinateur portant un code lisible par ordinateur configuré pour obliger un ordinateur à réaliser un procédé selon la revendication 9.
